# EUROPÄISCHE PATENTSCHRIFT

(11) **EP 2 841 257 B1**
(45) Veröffentlichungstag und Bekanntmachung des Hinweises auf die Patenterteilung: **25.05.2016**
(21) Anmeldenummer: 13737518.4
(22) Anmeldetag: 23.04.2013
(51) Int. Cl.: B29C 70/38, B29C 31/00

(54) **VORRICHTUNG ZUM LEGEN VON FOLIENFÖRMIGEN MATERIAL**
DEVICE FOR LAYING FILM-LIKE MATERIAL
DISPOSITIF PERMETTANT DE DÉPOSER UN MATÉRIAU DE TYPE FEUILLE

(30) Priorität: 25.04.2012 AT 5032012; 19.09.2012 AT 10232012
(43) Veröffentlichungstag der Anmeldung: 04.03.2015
(73) Patentinhaber: Fill Gesellschaft m.b.H., 4942 Gurten (AT)
(72) Erfinder: HOHENSINNER, Heinz, A-4981 Reichersberg (AT); REISCHAUER, Monika, A-4906 Eberschwang (AT); SCHICKBAUER, Martin, A-4952 Weng im Innkreis (AT)
(74) Vertreter: Burger, Hannes
(86) Internationale Anmeldenummer: PCT/AT2013/050097
(87) Internationale Veröffentlichungsnummer: WO 2013/159137

(56) Entgegenhaltungen:
- GB-A- 2 268 705
- US-A1- 2005 061 422

## Beschreibung

Die Erfindung betrifft ein Wechselmagazin für eine Vorrichtung zum Legen von folienförmigen Material, welches mit zumindest einer Schutzfolie, die eine Oberfläche des Materials bedeckt, versehen ist, wobei das Magazin eine Speicherrolle aufweist, auf welche das folienförmige Material samt Schutzfolie aufgewickelt ist.

Weiters betrifft die Erfindung eine Vorrichtung zum Legen von folienförmigem Material in eine Form.

Unter dem Begriff Folie bzw. folienförmig wir in dem vorliegenden Zusammenhang eine flächige Struktur verstanden, die zumindest in Längsrichtung, bevorzugt auch in Querrichtung, biegsam ausgebildet ist, insbesondere Gewebe und vorimprägnierte Gewebe, Prepreg, etc.

Bei der Herstellung von Rotorblättern von Windenergieanlagen ist es bekannt, zur Erhöhung der Beulsteifigkeit Gurte in Längsrichtung entlang der Rotorblattinnenwandung aufzubringen. Diese Gurte werden üblicherweise aus Gelegebändern konstanter Breite im Laminierverfahren hergestellt. Bei derartigen Gelegebändern kann es sich beispielsweise um Laminate aus GFK Folien handeln. Neben der Herstellung von Rotorblättern können aus diesen Gelegebändem Gurte als Verstärkungs- oder strukturgebende Elemente auch bei zahlreichen anderen Anwendungen zum Einsatz kommen.

Aus der WO2010129492 A ist eine Vorrichtung der eingangs genannten Art bekannt geworden, bei welcher zum Ausbringen/Auslegen der Folie entlang einer länglichen Form mit einem konkaven Querschnitt zur Herstellung eines Gurtes für ein Rotorblatt an einem Ende der Form mehrere Speicherrollen des folienartigen Materials stationär in einem Gestell angeordnet sind. Die Speicherrollen sind hierbei in der Höhe versetzt angeordnet. Von jeder dieser Rollen wird eine Folienlage abgezogen und in die Form gelegt. Nach erfolgtem Schichtaufbau werden die einzelnen Folienschichten durch Laminierung miteinander zu dem Gurt verbunden. Nachteilig an dem bekannten Aufbau ist es unter anderem, dass ein Austausch der Speichenollen mit einem großen Aufwand verbunden ist und lange Stehzeiten der Anlage verursachen kann. Auch gestaltet sich das Ausbringen/Auslegen der Folien entlang der Form mit dem bekannten Aufbau als sehr aufwendig.

US 2005/061422 offenbart eine Vorrichtung zum Legen von folienförmigen Material, welches mit zumindest einer Schutzfolie, die eine Oberfläche des Materials bedeckt, versehen ist, wobei die Vorrichtung eine Speicherrolle aufweist, auf welche das folienförmige Material samt Schutzfolie aufgewickelt ist, wobei die Vorrichtung zumindest eine angetriebene Schutzfolienaufwickelrolle zum Aufwickeln von Abschnitten der Schutzfolie nach deren Ablösen von dem Material aufweist, wobei die Speicherrolle durch eine Aufwickelbewegung der zumindest einen Schutzfolienaufwickelrolle angetrieben ist.

Es ist daher eine Aufgabe der Erfindung, die Nachteile des bekannten Stands der Technik zu überwinden und sowohl ein einfaches Austauschen der Rollen zu ermöglichen, als auch die Herstellung von Gegenständen, welche aus Folien aufgebaut sind, zu vereinfachen.

Diese Aufgabe wird mit einem Wechselmagazin der eingangs genannten Art erfindungsgemäß dadurch gelöst, dass das Wechselmagazin zumindest eine angetriebene Schutzfolienaufwickelrolle zum Aufwickeln von Abschnitten der Schutzfolie nach deren Ablösen von dem Material aufweist, wobei die Speicherrolle durch eine Aufwickelbewegung der zumindest einen Schutzfolienaufwickelrolle angetrieben ist.

Entsprechend der erfindungsgemäßen Lösung ist die Antriebseinheit der Speicherrolle bereits in das Wechselmagazin integriert. Bei einem Umrüsten des Wechselmagazins entfällt somit der komplizierte Vorgang des Verbindens der Speicherrolle mit einem Antrieb. Da der Antrieb nicht direkt an der Speicherrolle sitzt, sondern diese über die Bewegung der Schutzfolienaufwickelrolle, die wesentlich kleiner dimensioniert sein kann als die Speicherrolle, ergeben sich wesentliche Vorteile in Hinblick auf die Steuerung der Abwickelbewegung des Materials von der Speicherrolle. Nicht zuletzt deshalb, da die Schutzfolienaufwickelrolle ein wesentlich geringeres Trägheitsmoment als die Speicherrolle aufweist. Die erfindungsgemäße Lösung ermöglicht somit sowohl ein sehr rasches Austauschen der Speicherrolle als auch eine Optimierung des Prozesses der Materialförderung. Die erfindungsgemäße Lösung eignet sich insbesondere für klebende Materialien, die mit einer Schutzfolie gegen ein Selbstverkleben geschützt sind. Bei den verwendeten folienförmigen Materialien handelt es sich bevorzugt um sogenannte Prepreg-Folien, beispielsweise harzgetränkte GFK Folien, Glasfaser-, Kohlefaser-, Basaltfasermatten, etc. Das strukturgebende Faserkonstrukt kann, bei den soeben erwähnten Materialien, mit einer aus einem Klebestoff, beispielsweise Harz bzw. Kunstharz, gebildeten Matrix versehen werden.

Um ein Ablösen der Schutzfolie zu erleichtern kann es vorgesehen sein, dass zwischen der Speicherrolle und der Schutzfolienaufwickelrolle zumindest eine Abschälvorrichtung zum Ablösen der Schutzfolie von dem Material vorgesehen ist.

Um eine gute Weiterleitung und Materialförderung zu gewährleisten, kann es vorgesehen sein, dass der Abschälvorrichtung eine mit einer Antihaftbeschichtung beschichtete Führung für das von der Schutzfolie befreite Material nachgeordnet ist.

Gemäß einer vorteilhaften Weiterbildung der Erfindung kann es vorgesehen sein, dass zwischen der Speicherrolle und der zumindest einen Abschälvorrichtung der zumindest einen Schutzfolienaufwickelrolle zumindest eine Umlenkrolle zur Führung und Umlenkung des noch mit der Schutzfolie versehenen Materials in eine vertikale Richtung angeordnet ist. Dadurch kann das Material in eine optimale Position gebracht werden, da nach einem Abziehen der Schutzfolie von dem Material dieses durch die Schwerkraft unterstützt nach unten gezogen werden kann, wodurch sich der Förderprozess weiter optimieren lässt.

Um die Fördergeschwindigkeit optimal steuern bzw. regeln zu können, kann an der zumindest einen Umlenkrolle ein Drehgeber angeordnet sein.

Weiters kann es vorgesehen sein, dass das Wechselmagazin zumindest eine Bremse zum Bremsen der Speicherrolle aufweist. Auf diese Weise lässt sich die Fördergeschwindigkeit sehr einfach und effizient beeinflussen. Auch kann das folienförmige Material mittels der Bremse unter einer definierten Dehnung bzw. Spannung gehalten werden.

Die oben genannte Aufgabe lässt sich auch mit einer Vorrichtung der eingangs genannten Art lösen, welche ein erfindungsgemäßes Wechselmagazin aufweist. Bei der erfindungsgemäßen Vorrichtung kann es sich um einen stationären oder auch um einen bewegbaren Legekopf für die Folien handeln. Bei einer stationären Ausführungsform kann sich die Form, in welche die Folie gelegt wird, gegenüber dem Legekopf bewegen. Während sich bei einer mobilen Ausführungsform der Legekopf gegenüber der Form bewegt. An dieser Stelle sei auch darauf hingewiesen, dass in dem vorliegenden Zusammenhang die Begriffe "Vorrichtung" und "Legekopf" synonym verwendet werden.

Gemäß einer bevorzugten Variante der Erfindung, weist die Vorrichtung bzw. der Legekopf zumindest eine flexible Andrückvorrichtung auf, um das von der Schutzfolie befreite Material in eine vorgegebene Form zu pressen. Unter dem Begriff "flexibel" wird hierbei verstanden, dass sich die Andrückvorrichtung der Oberfläche der Form anpasst. Bei der Andrückvorrichtung kann es sich um eine oder mehrere Rollen mit einer elastischen Ummantelung, beispielsweise aus Schaumstoff, Gummi, oder einem anderen elastomeren Material, eine bombierte Rolle, mehrere gegeneinander in vertikaler Richtung verschiebbare kleinere Rollen, ein um eine Umlenkrolle geführtes Schleppgliederband bzw. eine Schleppgliederkette, deren Gewicht die Folie in die Form presst, eine biegsame Welle, einen mit losem Material, beispielsweise Metallkugeln, oder einem Fluid gefüllten Sack, etc. handeln. Durch die flexible Andrückvorrichtung wird gewährleistet, dass die Folie an den Querschnitt der Form angepasst in diese gepresst wird, ohne dass es zu Verwerfungen der Folie kommt. Ein weiterer Vorteil der flexiblen Andrückvorrichtung besteht darin, dass die Folie jedem beliebigen Querschnitt der Form angepasst werden kann.

Gemäß einer vorteilhaften Ausführungsform der Erfindung kann die Andrückvorrichtung zumindest drei Rollen umfassen, wobei zumindest zwei Rollen in Legerichtung des folienförmigen Materials betrachtet nebeneinander angeordnet sind.

Eine besonders gute Druckverteilung während des Pressens lässt sich dadurch erzielen, dass in Legerichtung des folienförmigen Materials betrachtet zumindest zwei hintereinander angeordnete Reihen von Rollen angeordnet sind, wobei jede Reihe mehrere quer zur Legerichtung nebeneinander angeordnete Rollen aufweist, wobei die Rollen einer Reihe gegenüber den Rollen einer anderen Reihe quer zur Legerichtung versetzt angeordnet sind.

Gemäß einer bevorzugten Variante der Erfindung kann jede Rolle in einer Wippe drehbar gelagert sein, wobei die Wippe um eine parallel zur Legerichtung der Folie verlaufende Achse drehbar gelagert ist. Hierdurch lässt sich eine besonders gute Anpassung der Stellungen der Rollen an die Geometrie der Form, in welche das folienförmige Material gepresst wird, erzielen.

Um eine individuelle Anpassung des Rollendrucks der einzelnen Rollen zu ermöglichen, kann jede Wippe mit einem Aktor verbunden sein.

Eine vorteilhafte Variante der Erfindung sieht vor, dass zwischen dem Wechselmagazin und der flexiblen Andrückvorrichtung zumindest eine Umlenkvorrichtung vorgesehen ist, um das aus dem Wechselmagazin austretende Material in Richtung der Andrückvorrichtung zu führen. Durch diese Ausführungsform der Erfindung lässt sich das aus dem Wechselmagazin geförderte Material auf einfache Weise in Richtung der Andrückvorrichtung befördern.

Mit dem erfindungsgemäßen Legekopf können Bahnen von Folien in Schichten übereinander in die Form gelegt werden. Hierbei hat es sich als besonders vorteilhaft erweisen, wenn der Legekopf eine Schneidevorrichtung zum Abtrennen des Materials aufweist, um die Folie am Ende einer Legebahn abschneiden zu können.

Um nach dem Abschneiden der Folie bzw. am Anfang einer Legebahn ein optimales Ausbringen der Folie zu gewährleisten kann der Legekopf eine Abstützung aufweisen, die einen in Richtung der Andrückvorrichtung umgeleiteten Frontabschnitt des Materials unterstützt.

Vorteilhafterweise ist die Abstützung in Richtung der Andrückvorrichtung und vice versa verschiebbar. Auf diese Weise lässt sich gewährleisten, dass die Abstützung nachdem es zu einer Straffung des von der Schutzfolie befreiten Materials durch ein Niederdrücken mittels der Andrückvorrichtung gekommen ist, wieder in eine neutrale Ausgangsposition zurückgefahren werden kann. Durch Anpressen des folienförmigen Materials gegen die Form und durch Ausführen einer Relativbewegung zwischen Legekopf und Form kommt es zu einem Abheben des Materials von der Abstützvorrichtung, sodass diese auf der Strecke, d.h. zwischen zwei Umkehrprunkten des Legekopfes bzw. der Form, nicht mehr benötigt wird. Durch ein Zurückziehen der Abstützvorrichtung von der Andrückvorrichtung auf der "Strecke" lässt sich verhindern, dass es durch die Abstützvorrichtung zu ungewollten Beschädigungen von bereits in die Form gepressten Materialschichten kommen kann. Alternativ zu der soeben genannten Ausführungsform kann die Abstützung jedoch auch federnd gelagert bzw. mit einer von einer Form, in welcher das Material ausgelegt wird, wegweisenden Federkraft belastet sein, sodass eine der Andrückvorrichtung zugewandte Vorderseite der Abstützung in einem unbelasteten Zustand von der Form abgehoben ist. Die Federkraft kann so ausgelegt sein, dass erst durch Belastung der Abstützfläche mit einem vorgebbaren Gewicht, diese nach unten in Richtung der Form bewegt ist.

Um ein optimales Auslegen der Folienbahnen auch bei Formen mit nicht rechteckigen Querschnitten zu gewährleisten, kann es vorgesehen sein, dass die Abstützung mehrere parallel zueinander angeordnete Stäbe aufweist, die um zumindest eine horizontal verlaufende Achse einzeln verschwenkbar gelagert sind und als Abstützfläche für den in Richtung der Andrückvorrichtung geförderten Frontabschnitt des Materials vorgesehen sind.

Eine besonders vorteilhafte Variante der Erfindung sieht vor, dass die Stäbe als Hohlstäbe ausgebildet sind und Ansaugöffnungen zum Ansaugen des Materials aufweisen. Auf diese Weise lässt sich sehr effizient ein Vakuum zwischen dem Material und der Abstützung erzeugen. Dies ist vor allem dann von Vorteil, wenn die Abstützung nicht von der Andrückvorrichtung zurückgezogen wird, da dann erreicht werden kann, dass zwischen den in der Form ausgelegten Schichten keine ungewollten Lufteinschlüsse vorhanden sind, die eventuell zu einer Blasenbildung führen könnten. Auch kann der entstehende Unterdruck zum Umgebungsdruck ein Anpressen der Folie unterstützen. Weiters können Bürsten in einer pfeilförmige Anordnung aus der Mitte heraus die Folie falten- und blasenfrei ausstreifen.

Da es bei allen Ausführungsformen besonders vorteilhaft ist, wenn die der Andrückvorrichtung zugewandte Vorderseite bzw. Vorderkante der Abstützung zumindest bei einem Umkehrpunkt des Legekopfes oder der Form, d.h. am Anfang einer neuen Folienbahn, unter der Andrückvorrichtung zu liegen kommt ist es vor allem bei rollenartigen Andrückvorrichtungen von großem Vorteil, wenn die der Andrückvorrichtung zugewandten Endbereiche der Stäbe konisch ausgebildet sind und abgerundete Spitzen oder unterschiedliche Längen, um ein Anliegen aus er Mitte heraus zu gewährleisten, aufweisen.

Gemäß einer bevorzugten Ausführungsform der Erfindung, kann es vorgesehen sein, dass die Abstützung aus nebeneinander angeordneten Endlosbändern gebildet ist, welche an einem ihrer Enden jeweils an einer gemeinsamen, angetriebenen Welle einzeln verschwenkbar gelagert sind und an dem anderen ihrer Enden jeweils in einer Umlenkung, insbesondere einer Umlenkrolle, geführt sind. Hierbei kann jedes Endlosband in einem Rahmen geführt sein, wobei an einem dem folienartigen Material zugewandten Bereich die Umlenkung angeordnet sein kann. Durch diese Ausführungsform der Erfindung wird durch die Abstützung eine Art Förderband für das auszulegende Material gebildet. Weisen die Endlosbänder eine höhere Umlaufgeschwindigkeit als die Auslege- bzw. Fördergeschwindigkeit des folienförmigen Materials auf, so kann ein Durchrutschen der Endlosbänder unter dem folienfömigen Material erreicht werden. Auf diese Weise lässt sich ein Anhaften des folienförmigen Materials an der Abstützung sehr effizient verhindern.

Eine Weiterbildung der Erfindung, mit welcher sich sehr effizient Beschädigungen des folienförmigen Materials verhindern lässt, sieht vor, dass dem folienförmigen Material zugewandte Endbereiche der Abstützung jeweils mit einer Abdeckung, insbesondere einer Teflon-Kappe, abgedeckt sind.

Zum besseren Verständnis der Erfindung wird diese anhand der nachfolgenden Figuren näher erläutert, welche nicht einschränkende Ausführungsbeispiele betreffen.

Es zeigen jeweils in stark schematisch vereinfachter Darstellung:
- Fig. 1: eine perspektivische Ansicht einer Anlage mit einer ersten Variante einer erfindungsgemäßen Vorrichtung zum Legen von folienartigen Material;
- Fig. 2: eine perspektivische Ansicht einer Anlage mit einer zweiten Variante einer erfindungsgemäßen Vorrichtung zum Legen von folienartigem Material;
- Fig. 3: eine perspektivische Ansicht einer ersten Variante einer erfindungsgemäßen Vorrichtung;
- Fig. 4: eine weitere perspektivische Ansicht der Vorrichtung aus Fig. 3;
- Fig. 5: eine Vorderansicht der Vorrichtung aus Fig. 3;
- Fig. 6: eine Seitenansicht der Vorrichtung aus Fig. 5;
- Fig. 7: einen Schnitt entlang der Linie VII - VII in Fig. 5;
- Fig. 8: eine perspektivische Ansicht einer zweiten Variante einer erfindungsgemäßen Vorrichtung;
- Fig. 9: eine Vorderansicht der Vorrichtung aus Fig. 9;
- Fig. 10: eine Seitenansicht der Vorrichtung aus Fig. 9;
- Fig. 11: eine teilweise geschnittene Unteransicht der Vorrichtung aus Fig. 9;
- Fig. 12: eine perspektivische Ansicht einer dritten Variante einer erfindungsgemäßen Vorrichtung;
- Fig. 13: eine weitere perspektivische Ansicht der Vorrichtung aus Fig. 12;
- Fig. 14: eine perspektivische Unteransicht eines Details der Vorrichtung aus Fig. 12;
- Fig. 15: eine Seitenansicht des Details aus Fig. 14;
- Fig. 16: eine Frontalansicht einer Andrückvorrichtung der Vorrichtung aus Fig. 12;
- Fig. 17: einen Querschnitt durch die Andrückvorrichtung aus Fig. 16;
- Fig. 18: eine Seitenansicht der Andrückvorrichtung aus Fig. 16 und
- Fig. 19: eine perspektivische Unteransicht der Andrückvorrichtung aus Fig. 16.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Weiters sei darauf hingewiesen, dass die Figuren übergreifend beschrieben sind.

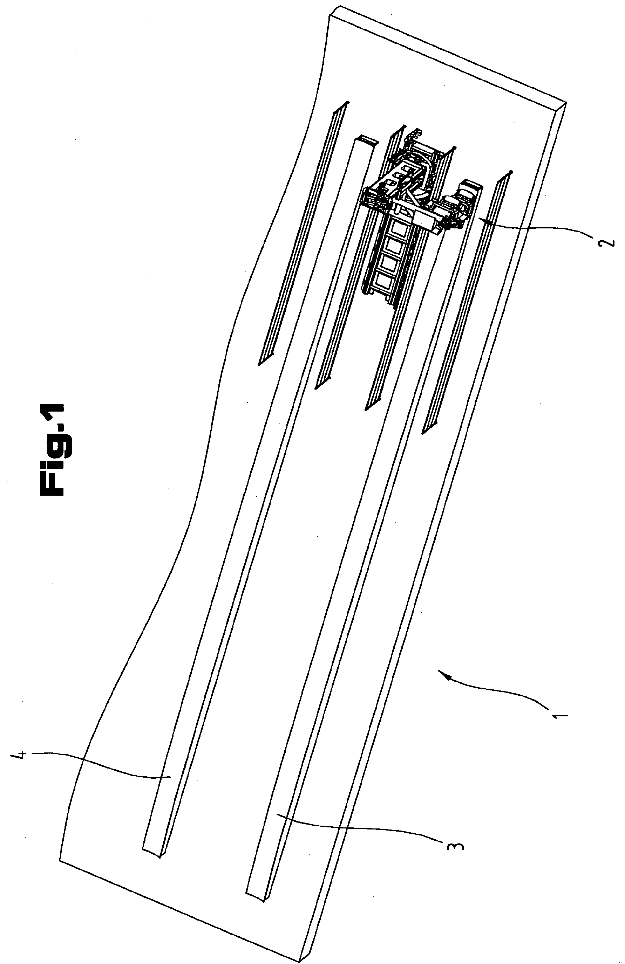

Fig. 1 zeigt eine erste Variante einer Anlage 1 zum Legen von Folien. Bei dieser Variante kommt ein erfindungsgemäßer Legekopf 2 zum Einsatz der um eine vertikale Achse verschwenkbar angeordnet ist. Diese Ausführungsform ermöglicht es auf einfache Weise, durch Verschwenken des Legekopfes 2 zwei parallele Formen 3, 4 mit folienförmige Material zu belegen. Die Formen können beispielsweise eine beliebige Querschnittsform aufweisen, beispielsweise konkav oder konvex.

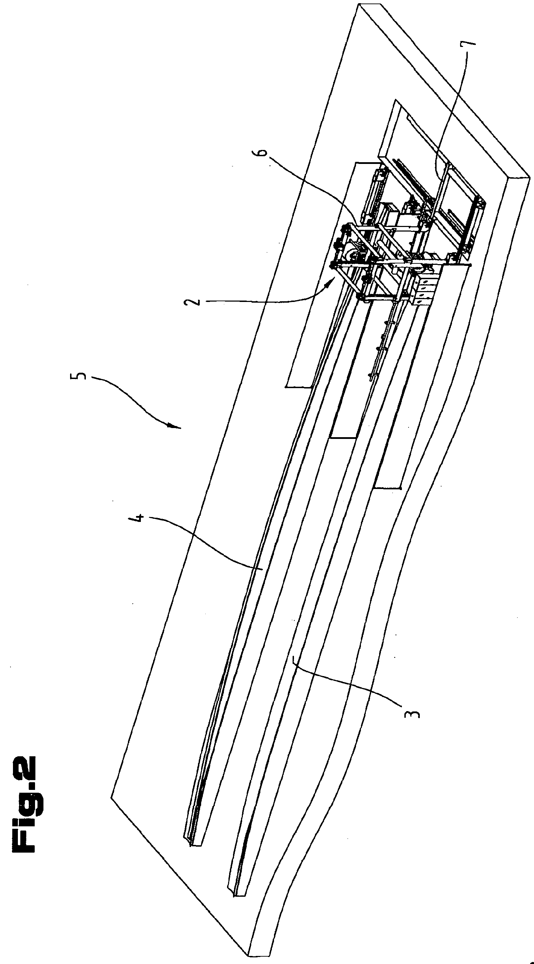

Fig. 2 zeigt eine weitere Variante einer Anlage 5 zum Legen von Folien, wobei der Legekopf 2 in einem Gestell 6 angeordnet ist, welches entlang von Führungen 7 verschoben werden kann. Ein Teil dieser Führungen 7 kann parallel zu der Längserstreckung der Formen 3, 4 verlaufen und ein Teil der Führungen kann an den Kopfseiten der Formen quer zur Längserstreckung der Form 3, 4 angeordnet sein. Diese Variante hat den Vorteil, dass sich im Prinzip beliebig viele neben einander angeordnete Formen 3, 4 mit einem einzigen Legekopf belegen lassen, da der Legekopf an den kopfseitigen Enden der Formen 3, 4 von einer Form zur nächsten bewegt werden kann.

An dieser Stelle sei angemerkt, dass in allen Ausführungsformen der Erfindung bevorzugt entweder der Legekopf 2 gegenüber der Form 3, 4 bewegt wird oder umgekehrt. D.h., dass entweder die Form 3 bzw. 4 ortsfest verbleibt und der Legekopf 2 bewegt wird oder der Legekopf 2 still steht und sich die Form 3 bzw. 4 bewegt. Grundsätzlich sind jedoch auch Ausführungen der Erfindung denkbar, in welchen sich sowohl der Legekopf 2 als auch die Form 3, 4 bewegen.

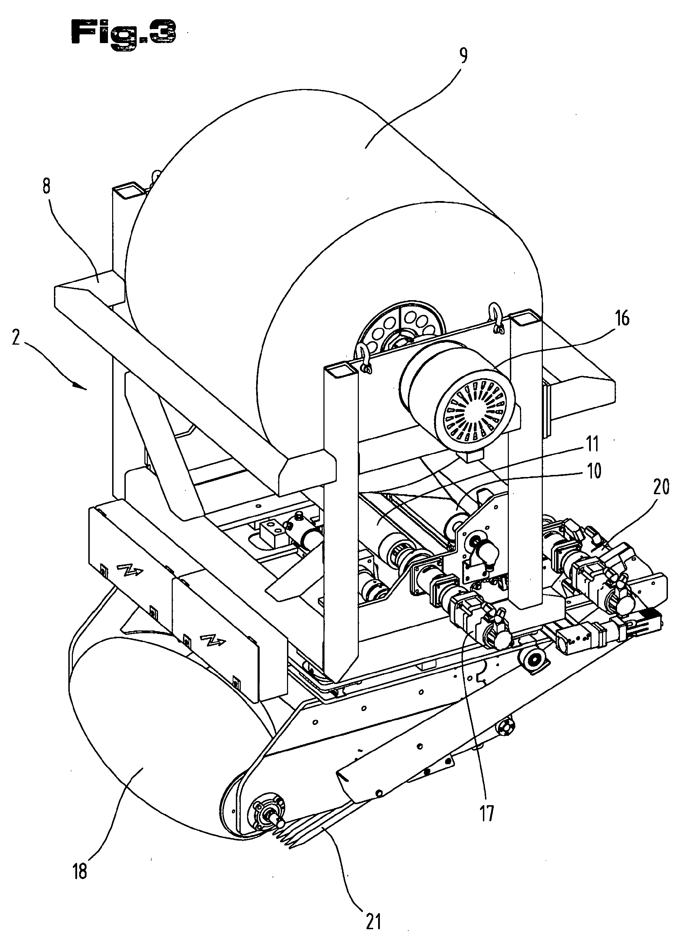

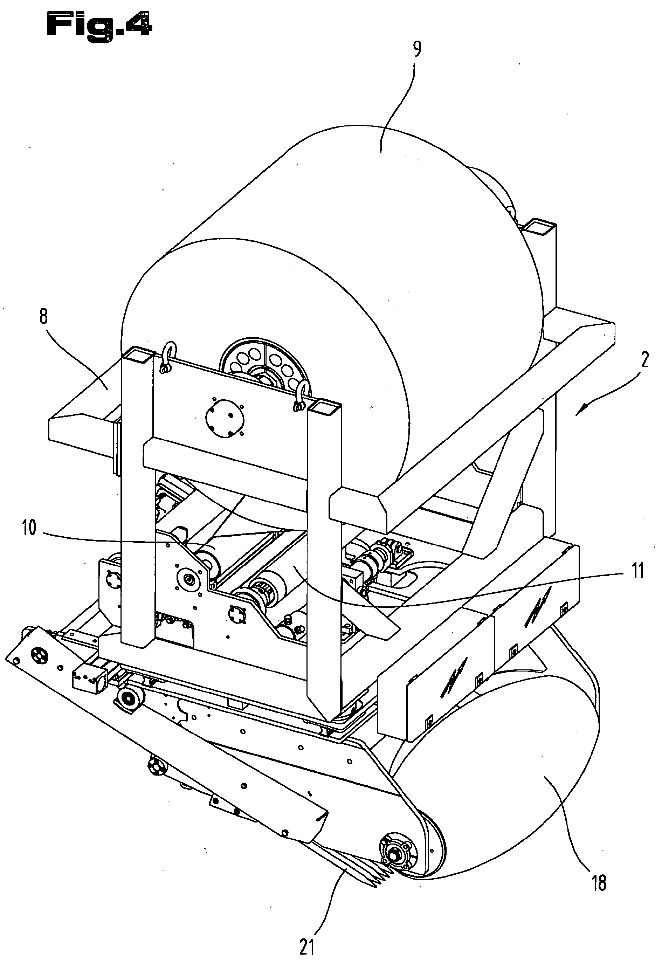

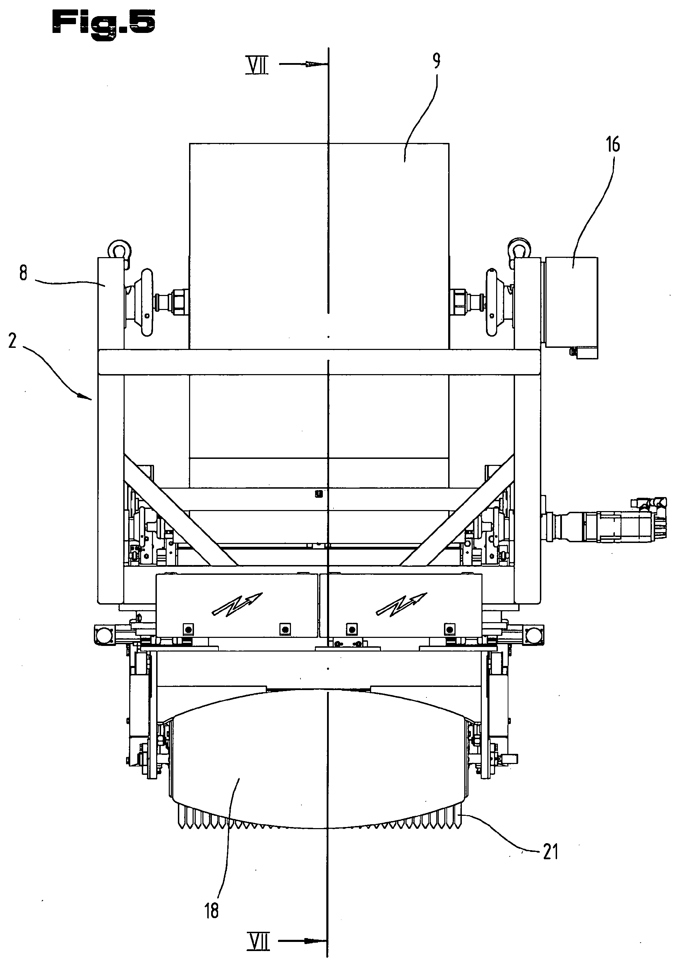

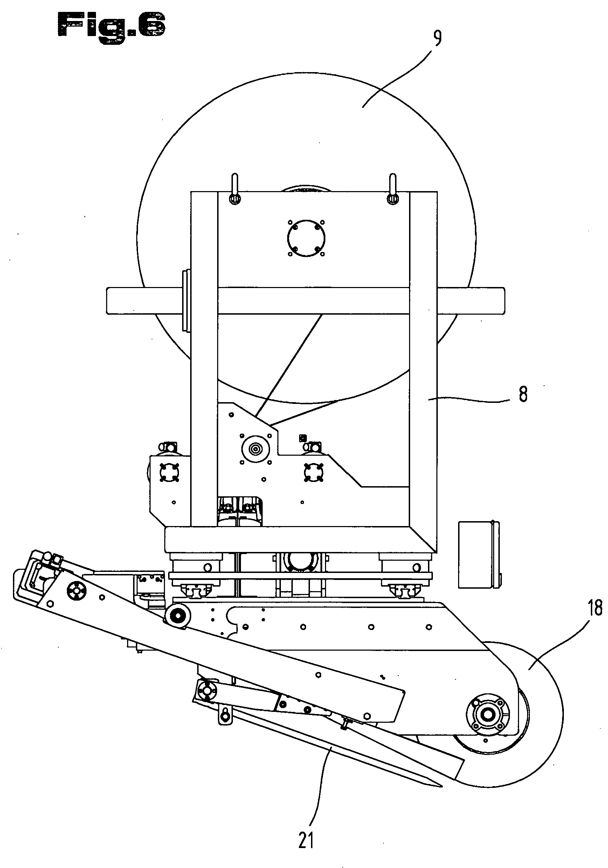

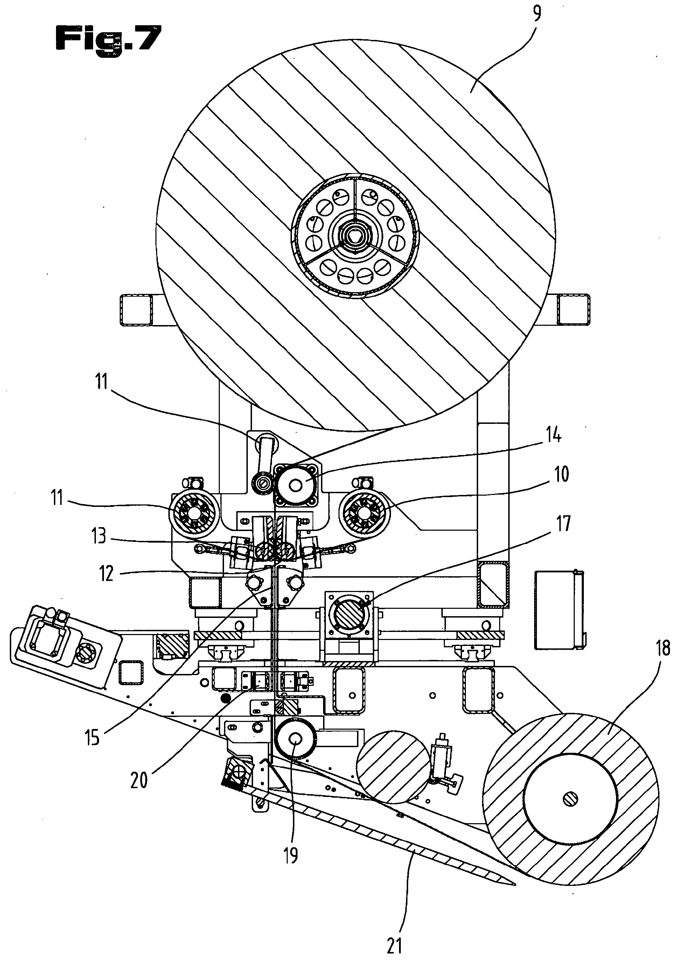

Wie aus den Figuren 3 bis 7 erkennbar ist, ist die abzuwickelnde Folie hierbei in einem Wechselmagazin 8 eingelegt, welches als Ganzes ausgetauscht werden kann und einen Teil des erfindungsgemäßen Legekopfes 2 bildet.

Das Wechselmagazin 8 weist eine Speicherrolle 9 auf, auf welche das folienförmige Material samt Schutzfolie aufgewickelt ist. Weiters ist zumindest eine der Speicherrolle 9 nachgeordnete angetriebene Schutzfolienaufwickelrolle 10, 11 zum Aufwickeln von Abschnitten der Schutzfolie nach deren Ablösen von dem folienfömigen Material vorgesehen. Die Speicherrolle 9 ist durch eine Aufwickelbewegung der Schutzfolienaufwickelrolle 10, 11 angetrieben. D.h. eine Bahn der abgezogenen Schutzfolie wird auf eine der Schutzfolienaufwickelrollen 10, 11 aufgewickelt, wodurch ein auf die Speicherrolle 9 wirkendes Drehmoment erzeugt wird, welches die Speicherrolle 9 antreibt. In der dargestellten Ausführungsform sind zwei Schutzfolienaufwickelrollen 10 und 11 vorgesehen. Dies ist vor allem dann von Vorteil, wenn das von der Speicherrolle 9 abzuwickelnde Material an jeder der beiden Oberflächen von einer Schutzfolie abgedeckt ist. Grundsätzlich funktioniert die Erfindung jedoch auch mit einer einzigen Schutzfolienaufwickelrolle 10, 11.

Die Schutzfolienaufwickelrollen 10, 11 können mit je einem eigenen Motor angetrieben sein. Zwischen der Speicherrolle 9 und jeder Schutzfolienaufwickelrolle 10, 11 ist eine Abschälvorrichtung 12, 13 zum Ablösen der Schutzfolie vorgesehen. Diese Abschälvorrichtungen 12, 13 können beispielsweise als Abschälkante, als Gleitschuh, als Breitstreckwalze etc. ausgebildet sein.

Zwischen der Speicherrolle 9 und den Abschälvorrichtungen 12, 13 kann eine Umlenkrolle 14 zur Führung und Umlenkung des noch mit der Schutzfolie versehenen Materials in eine vertikale Richtung vorgesehen sein.

Nach der Abschälvorrichtung 12, 13 kann eine mit einer Antihaftbeschichtung beschichtete Führung 15 für das von der Schutzhülle befreite bzw. abgeschälte Material angeordnet sein. An der Umlenkrolle 14 kann ein Drehgeber, angeordnet sein. Falls zwei Schutzfolienaufwickelrollen 10, 11 vorgesehen sind, müssen deren Drehgeschwindigkeiten synchronisiert werden, zu diesem Zweck kann im Bereich jeder Abschälkante 12, 13 ein Kraft- bzw. Drucksensor, beispielsweise eine Kraftmessdose, angeordnet sein, um die jeweilige Zugkraft zu ermitteln. Die gemessenen Werte werden miteinander verglichen und die beiden Zugkräfte durch eine entsprechende Ansteuerung der Antriebsmotoren auf einen vorgebbaren Sollwert hin geregelt, wobei jeder Motor der Antriebsrollen einen eigenen Regelkreis mit eigenen Stellgrößen aufweisen kann. Über den Drehgeber an der Umlenkrolle 14 kann überprüft werden, ob die gewünschte Abwickelgeschwindigkeit eingehalten wird. Mittels einer Bremse 16 an der Speicherrolle 9 kann diese, falls ihre Abwickelgeschwindigkeit einen Grenzwert überschreitet, abgebremst werden.

Aufgrund unterschiedlicher Spannungen in der Folie kann die Materialbahn aus der Mitte bewegt werden, um derartige Bewegungen der Folie ausgleichen zu können, kann der Legekopf 2 auch eine entsprechende Bahnmittelregelung mit einer entsprechenden Steuerung, Sensoren und einen Bahnmittelregelungsmotor 17 aufweisen.

Wie aus den Figuren weiter erkennbar ist, kann der Legekopf 2 eine flexible Andrückvorrichtung 18 aufweisen, beispielsweise in Form einer Rolle, um das von der Schutzfolie befreite Material in die Form 3 bzw. 4 zu pressen.

Zwischen dem Wechselmagazin 8 und der flexiblen Andrückvorrichtung 18 kann eine Umlenkvorrichtung 19, beispielsweise in Form einer Rolle, vorgesehen sein, um das aus dem Wechselmagazin austretende Material in Richtung der Andrückvorrichtung zu führen, von welcher die Folie in die Form gepresst wird. Um die Folie abtrennen zu können, nachdem sie in die Form gepresst worden ist, kann der Legekopf 2 eine Schneidevorrichtung 20 aufweisen, beispielsweise ein Ultraschalmesser, einen Laserschneidevorrichtung, eine Scheren oder Messer, eine Wasserstrahlschneidevorrichtung, etc.

Zur Führung der Folie, bevor diese die Andrückvorrichtung 18 erreicht, kann der Legekopf 2 eine Abstützung 21 aufweisen. Diese Abstützung 21 kann gegen die Legerichtung, in Richtung der Andrückvorrichtung18 und von dieser zurück bewegt werden. Die Abstützung 21 kann beispielsweise mehrere parallel zueinander angeordnete Stäbe aufweisen, die um zumindest eine horizontal verlaufende Achse einzeln verschwenkbar gelagert sind. Die der Andrückvorrichtung 18 zugewandten Endbereiche der Stäbe 21 können konisch ausgebildet sein und abgerundete Spitzen aufweisen. Weiters können die Stäbe als Hohlstäbe ausgebildet sein und Ansaugöffnungen zum Ansaugen des Materials aufweisen. Um zu gewährleisten, dass die Stäbe in einem unbelasteten Zustand stets von der Form abgehoben sind können diese mit einer nach oben wirkenden, d.h. einer von der Form weg gerichteten, Rückstellkraft belastet sein. Somit können die Stäbe schwebend gelagert sein, um Verletzungen des in die Form gepressten Materials zu verhindern.

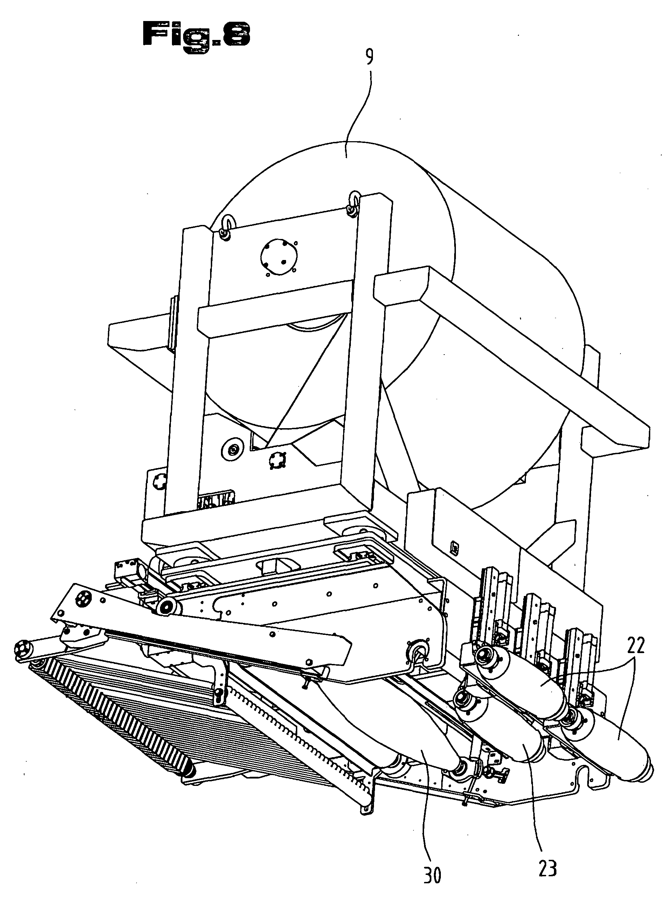

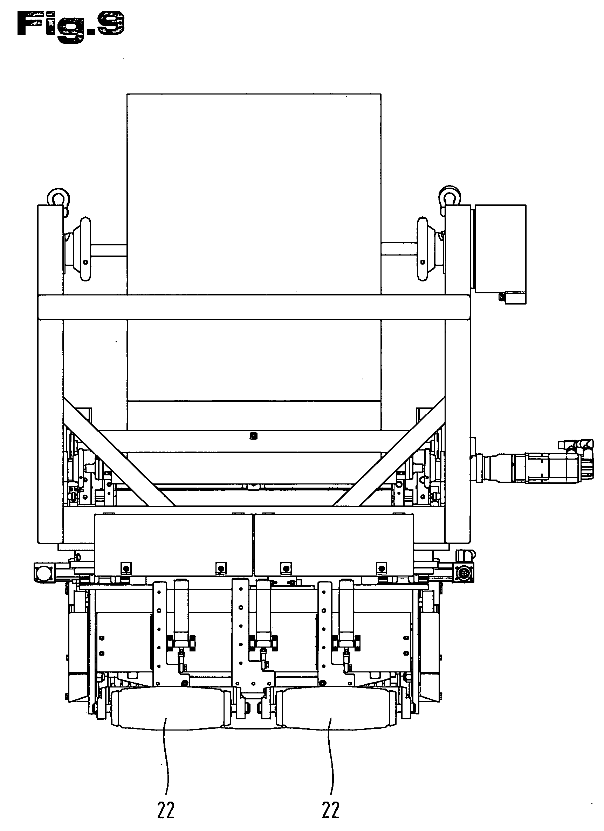

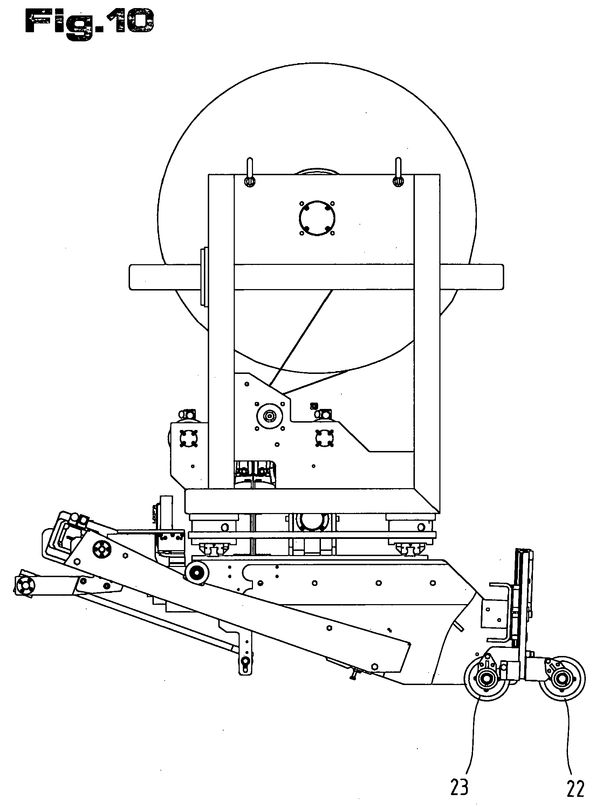

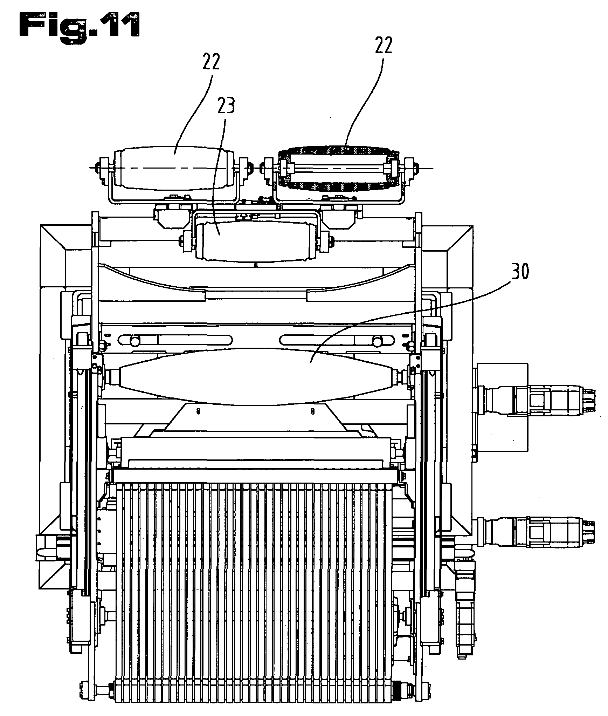

Wie in den Figuren 8 bis 11 dargestellt, kann die die Andrückvorrichtung auch mindestens drei Rollen 22, 23 umfassen, wobei zumindest zwei Rollen 22 in Legerichtung betrachtet nebeneinander angeordnet sind. Die dritte Rolle 23 kann zwischen den beiden Rollen 22 angeordnet sein. Auch kann eine Vorformwalze 30 vorgesehen sein, um das Material während des Auslegens vorzuformen. Bevorzugt sind die Rollen 22 und 23 sowie die Vorformwalze 30 bombiert ausgebildet.

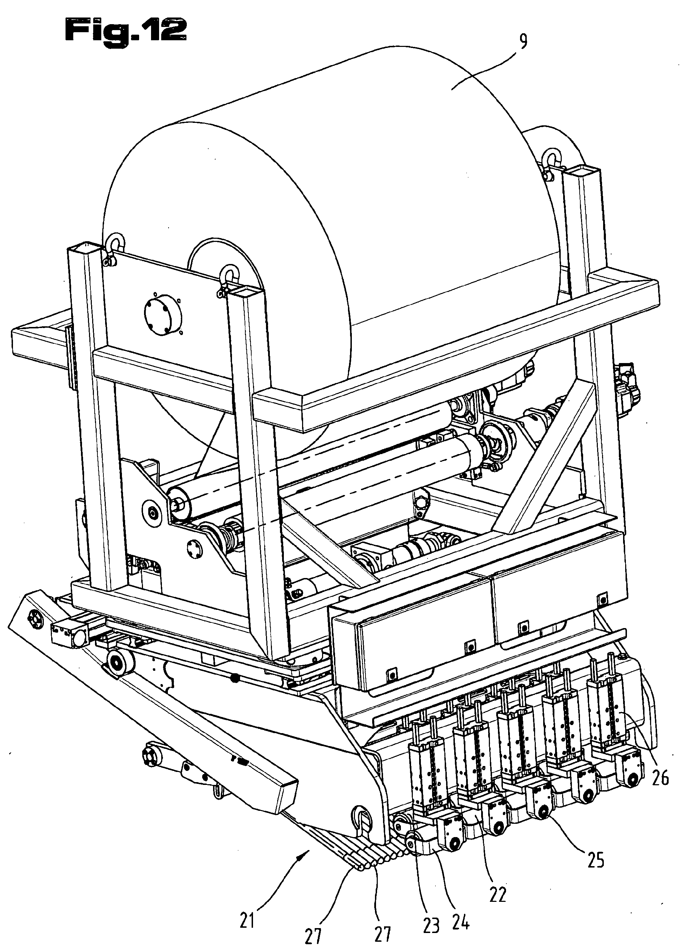

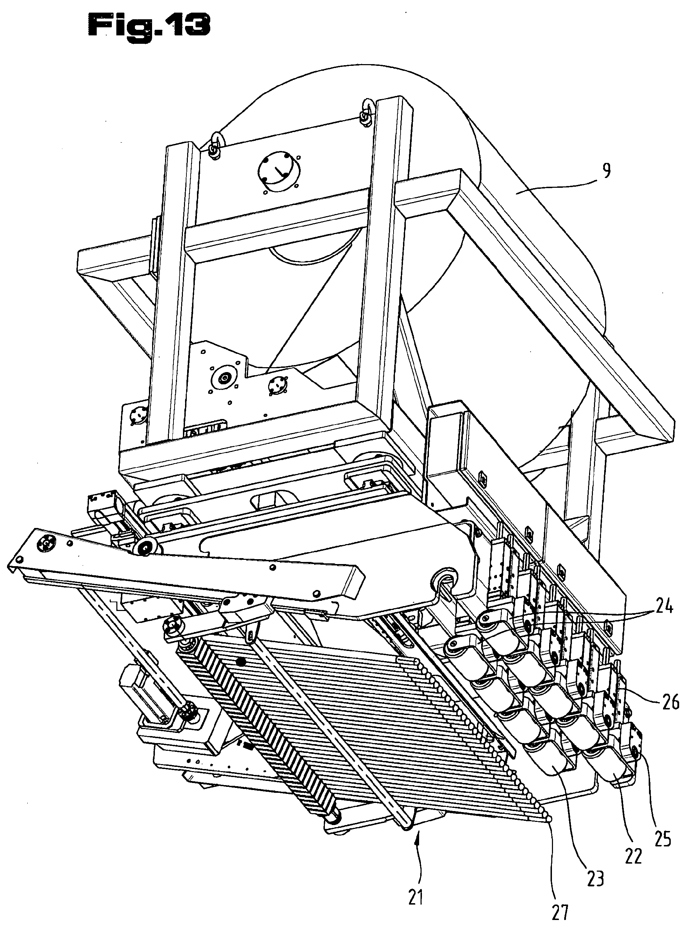

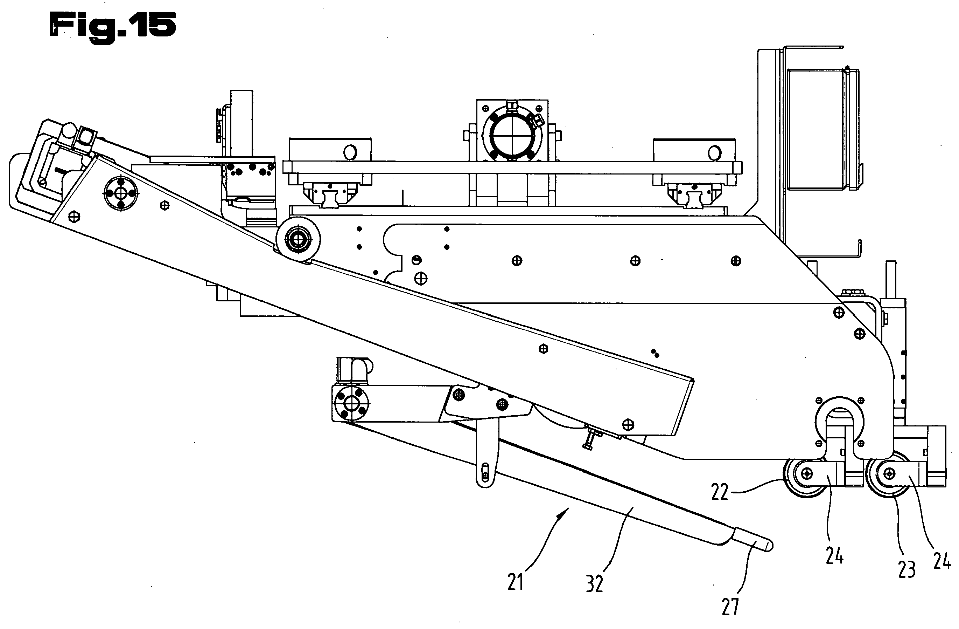

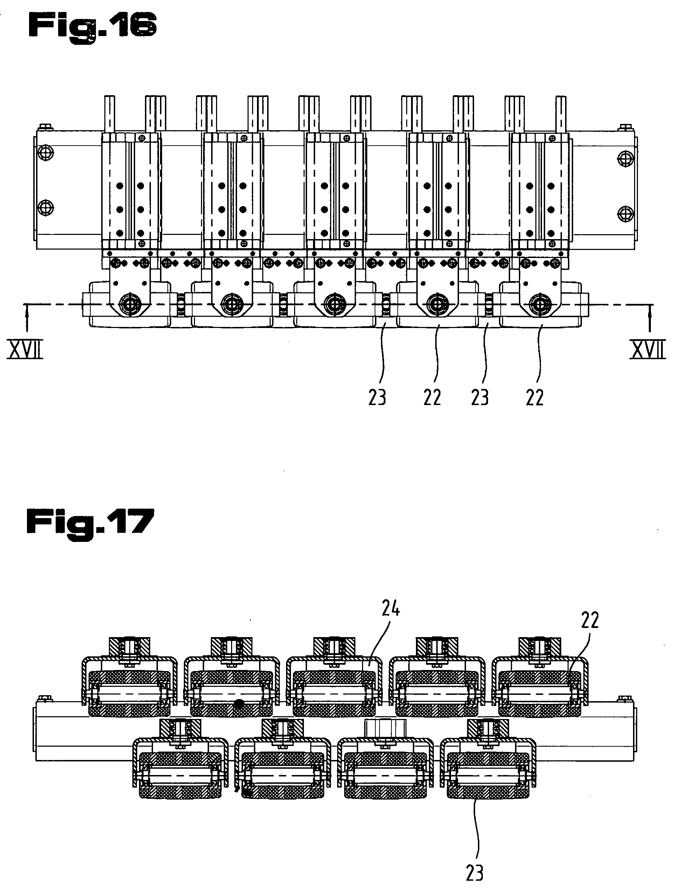

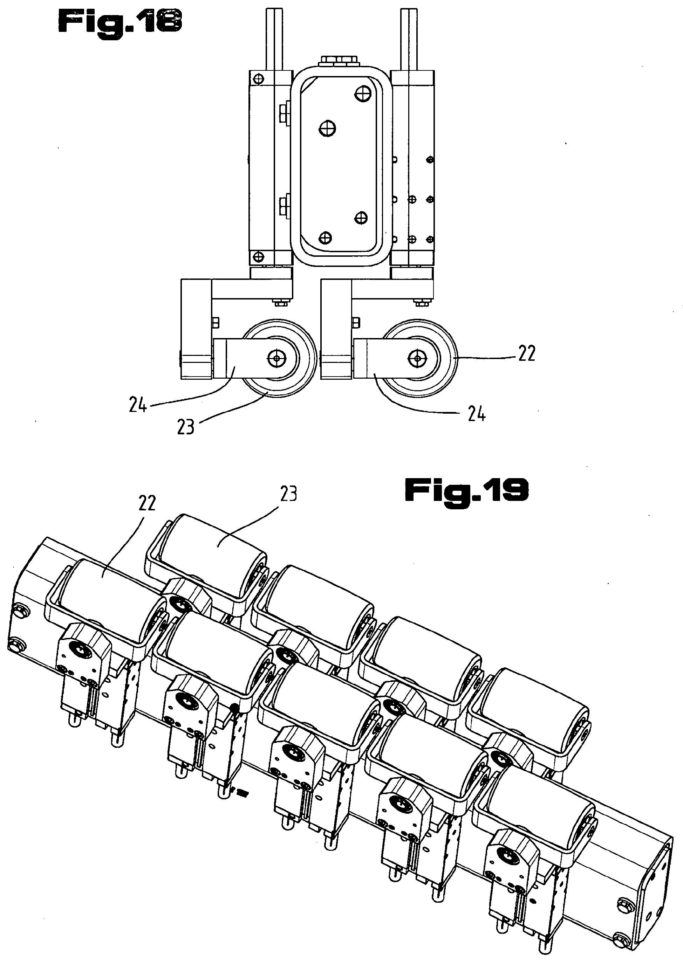

Gemäß den Figuren 12 bis 19 kann die Andrückvorrichtung mindestens zwei hintereinander angeordnete Reihen von Rollen 22, 23 aufweisen. Jede der Reihen kann mehrere quer zur Legerichtung nebeneinander angeordnete Rollen 22, 23 aufweisen. Die Rollen 22 einer ersten Reihe können hierbei gegenüber den Rollen 23 einer anderen Reihe quer zur Legerichtung versetzt angeordnet sein. Auch bei dieser Ausführungsform der Erfindung sind die Rollen 22 und 23 bevorzugt bombiert ausgebildet, um ein optimales Anpressen des Materials in die Form zu ermöglichen.

Weiters kann jede Rolle 22, 23 in einer Wippe 24 drehbar gelagert ist, wobei die Wippe 24 um eine parallel zur Legerichtung der Folie verlaufende Achse 25 drehbar gelagert sein kann. Jede Wippe 24 kann mit einem Aktor 26 verbunden sein, um eine für jede Rolle 22, 23 individuell einstellbare Anpresskraft, mit welcher die einzelnen Rollen 22, 23 das folienförmige Material in die Form pressen, einstellen zu können. Bei den Aktoren 26 kann es sich beispielsweise um hydraulische, pneumatische, mechanische, elektromechanische oder elektrische Aktoren handeln.

Weiters können die Spitzen der Abstützung 21 jeweils mit einer Abdeckung 27, insbesondere einer Teflon-Kappe, abgedeckt sein.

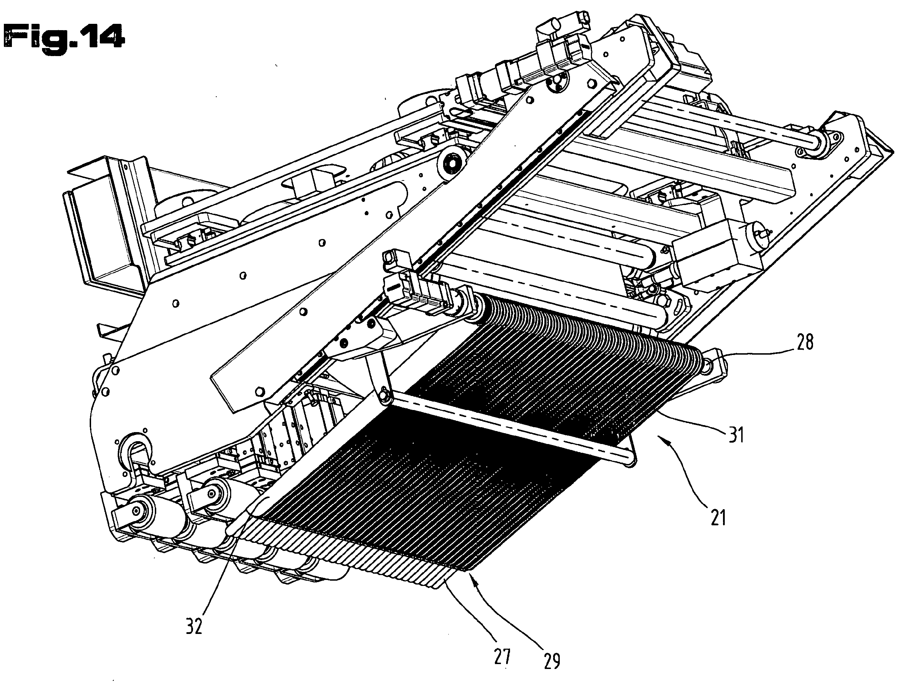

Wie aus Fig. 14 ersichtlich ist, kann die Abstützung 21 aus nebeneinander angeordneten Endlosbändern 31 gebildet sein welche an einem ihrer Enden jeweils an einer gemeinsamen, angetriebenen Welle 28 einzeln verschwenkbar gelagert und an dem anderen ihrer Enden jeweils in einer Umlenkung 29, beispielsweise einer Umlenkrolle oder einem Umlenkzapfen, geführt sein können.

Jedes Endlosband 31 kann in einem Rahmen 32 geführt sein, an dessen dem folienartigen Material zugewandten Endbereich die Umlenkung 29 angeordnet sein kann. Anschließend an die Umlenkungen 29 können die Abdeckungen 27 für die Spitzen vorgesehen sein. Die Rahmen 32 können beispielsweise je zwei parallel zueinander verlaufende Bleche aufweisen, zwischen welchen die Endlosbänder 31 geführt sind. Die Endlosbänder 31 können an ihren der Welle 28 zugewandten Seiten eine Verzahnung aufweisen, wobei die Welle 28 ebenfalls eine entsprechende Verzahnung aufweisen kann, um auf einfache Weise einen sehr effizienten und verlustarmen Antrieb der Endlosbänder zu ermöglichen.

Die Ausführungsbeispiele zeigen mögliche Ausführungsvarianten des erfindungsgemäßen Wechselmagazins bzw. des erfindungsgemäßen Legekopfs, wobei an dieser Stelle bemerkt sei, dass die Erfindung nicht auf die speziell dargestellten Ausführungsvarianten derselben eingeschränkt ist.

### Bezugszeichenaufstellung

- 1: Anlage
- 2: Vorrichtung/Legekopf
- 3: Form
- 4: Form
- 5: Anlage

- 6: Gestell
- 7: Führungen
- 8: Wechselmagazin
- 9: Speicherrolle
- 10: Schutzfolienaufwickelrolle

- 11: Schutzfolienaufwickelrolle
- 12: Abschälvorrichtung
- 13: Abschälvorrichtung
- 14: Umlenkrolle
- 15: Führung

- 16: Bremse
- 17: Bahnmittelregelungsmotor
- 18: Andrückvorrichtung
- 19: Umlenkvorrichtung
- 20: Schneidevorrichtung

- 21: Abstützung
- 22: Rolle
- 23: Rolle
- 24: Wippe
- 25: Achse

- 26: Aktor
- 27: Abdeckung
- 28: Welle
- 29: Umlenkung
- 30: Vorformwalze

- 31: Endlosband
- 32: Rahmen

## Patentansprüche

1. Wechselmagazin (8) ) welches als Ganzes ausgetauscht werden kann und Teil einer Vorrichtung (2) zum Legen von folienförmigen Material ist, welches mit zumindest einer Schutzfolie, die eine Oberfläche des Materials bedeckt, versehen ist, wobei das Wechselmagazin (8) eine Speicherrolle (9) aufweist, auf welche das folienförmige Material samt Schutzfolie aufgewickelt ist, wobei das Wechselmagazin (8) zumindest eine angetriebene Schutzfolienaufwickelrolle (10, 11) zum Aufwickeln von Abschnitten der Schutzfolie nach deren Ablösen von dem Material aufweist, wobei die Speicherrolle (9) durch eine Aufwickelbewegung der zumindest einen Schutzfolienaufwickelrolle (10, 11) angetrieben ist.

2. Wechselmagazin nach Anspruch 1, **dadurch gekennzeichnet, dass** zwischen der Speicherrolle (9) und der Schutzfolienaufwickelrolle (10, 11) zumindest eine Abschälvorrichtung (12, 13) zum Ablösen der Schutzfolie von dem Material vorgesehen ist.

3. Wechselmagazin nach Anspruch 2, **dadurch gekennzeichnet, dass** der Abschälvorrichtung (12, 13) eine mit einer Antihaftbeschichtung beschichtete Führung (15) für das von der Schutzfolie befreite Material nachgeordnet ist.

4. Wechselmagazin nach einem der Ansprüche 1 bis 3, **dadurch gekennzeichnet, dass** zwischen der Speicherrolle (9) und der zumindest einen Abschälvorrichtung (12, 13) der zumindest einen Schutzfolienaufwickelrolle (10, 11) zumindest eine Umlenkrolle (14) zur Führung und Umlenkung des noch mit der Schutzfolie versehenen Materials in eine vertikale Richtung vorgesehen ist.

5. Wechselmagazin nach Anspruch 4, **dadurch gekennzeichnet, dass** an der zumindest einen Umlenkrolle (14) ein Drehgeber angeordnet ist.

6. Wechselmagazin nach Anspruch 5, **dadurch gekennzeichnet, dass** es zumindest eine Bremse (16) zum Bremsen der Speicherrolle (9) aufweist.

7. Vorrichtung (2) zum Legen von folienfömigen Material in eine Form (3, 4), **dadurch gekennzeichnet, dass** sie ein Wechselmagazin (8) nach einem der Ansprüche 1 bis 6 aufweist.

8. Vorrichtung nach Anspruch 7, **dadurch gekennzeichnet, dass** sie zumindest eine flexible Andrückvorrichtung (18) aufweist, um das von der Schutzfolie befreite Material in eine vorgegebene Form (3, 4) zu pressen.

9. Vorrichtung nach Anspruch 8, **dadurch gekennzeichnet, dass** zwischen dem Wechselmagazin (8) und der zumindest einen flexiblen Andrückvorrichtung (18) zumindest eine Umlenkvorrichtung (19) vorgesehen ist, um das aus dem Wechselmagazin (8) austretende Material in Richtung der Andrückvorrichtung (18) zu führen.

10. Vorrichtung nach Anspruch 8 oder 9, dadurch dass die Andrückvorrichtung zumindest drei Rollen (22, 23) umfasst, wobei zumindest zwei Rollen (22, 23) in Legerichtung des folienförmigen Materials betrachtet nebeneinander angeordnet sind.

11. Vorrichtung nach einem der Ansprüche 8 bis 10, **dadurch gekennzeichnet, dass** in Legerichtung des folienförmigen Materials betrachtet zumindest zwei hintereinander angeordnete Reihen von Rollen (22, 23) angeordnet sind, wobei jede Reihe mehrere quer zur Legerichtung nebeneinander angeordnete Rollen (22, 23) aufweist, wobei die Rollen (22) einer Reihe gegenüber den Rollen (23) einer anderen Reihe quer zur Legerichtung versetzt angeordnet sind.

12. Vorrichtung nach Anspruch 10 oder 11, **dadurch gekennzeichnet, dass** jede Rolle (22, 23) in einer Wippe (24) drehbar gelagert ist, wobei die Wippe (24) um eine parallel zur Legerichtung der Folie verlaufende Achse (25) drehbar gelagert ist.

13. Vorrichtung nach Anspruch 12, **dadurch gekennzeichnet, dass** jede Wippe (24) mit einem Aktor (26) verbunden ist.

14. Vorrichtung nach einem der Ansprüche 7 bis 13, **dadurch gekennzeichnet, dass** sie eine Schneidevorrichtung (20) zum Abtrennen des Materials aufweist

15. Vorrichtung nach einem der Ansprüche 8 bis 14, **dadurch gekennzeichnet, dass** eine in Förderrichtung des Materials vor der Andrückvorrichtung (18) angeordnete und einen von der Umlenkvorrichtung (19) in Richtung der Andrückvorrichtung (18) umgeleiteten Frontabschnitt des Materials unterstützende Abstützung (21) vorgesehen ist.

16. Vorrichtung nach Anspruch 15, **dadurch gekennzeichnet, dass** die Abstützung (21) in Richtung der Andrückvorrichtung (18) und vice versa verschiebbar ist.

17. Vorrichtung nach Anspruch 14 oder 15, **dadurch gekennzeichnet, dass** die Abstützung (21) mehrere parallel zueinander angeordnete Stäbe aufweist, die um zumindest eine horizontal verlaufende Achse einzeln verschwenkbar gelagert sind und als Abstützfläche für den in Richtung der Andrückvorrichtung (18) geförderten Frontabschnitt des Materials vorgesehen sind.

18. Vorrichtung nach Anspruch 17, **dadurch gekennzeichnet, dass** die Stäbe als Hohlstäbe ausgebildet sind und Ansaugöffnungen zum Ansaugen des Materials aufweisen.

19. Vorrichtung nach einem der Anspruch 17 oder 18, **dadurch gekennzeichnet, dass** die der Andrückvorrichtung (18) zugewandten Endbereiche der Stäbe konisch ausgebildet sind und abgerundete Spitzen aufweisen.

20. Vorrichtung nach Anspruch 15 oder 16, **dadurch gekennzeichnet, dass** die Abstützung (21) aus nebeneinander angeordneten Endlosbändern (31) gebildet ist, welche an einem ihrer Enden jeweils an einer gemeinsamen, angetriebenen Welle (28) einzeln verschwenkbar gelagert sind und an dem anderen ihrer Enden jeweils in einer Umlenkung (29), insbesondere einer Umlenkrolle, geführt sind.

21. Vorrichtung nach Anspruch 20, **dadurch gekennzeichnet, dass** jedes Endlosband (31) in einem Rahmen (32) geführt ist, wobei an einem dem folienartigen Material zugewandten Bereich die Umlenkung (29) angeordnet ist.

22. Vorrichtung nach einem der Ansprüche 15 bis 21, **dadurch gekennzeichnet, dass** dem folienförmigen Material zugewandte Endbereiche der Abstützung (21) jeweils mit einer Abdeckung (27), insbesondere einer Teflon-Kappe, abgedeckt sind.

## Claims

1. An interchangeable magazine (8) which can be replaced as a whole and is part of a device (2) for laying film-like material, which is provided with at least one protective film which covers a surface of the material, wherein the interchangeable magazine (8) comprises a storage roller (9) onto which the film-like material together with the protective film is wound, wherein the interchangeable magazine (8) comprises at least one driven protective film take-up roller (10, 11) for taking up sections of the protective film after the detachment thereof from the material, wherein the storage roller (9) is driven by a winding-up movement of the at least one protective film take-up roller (10, 11).

2. The interchangeable magazine according to claim 1, **characterised in that** at least one peeling device (12, 13) for peeling the protective film from the material is provided between the storage roller (9) and the protective film take-up roller (10, 11).

3. The interchangeable magazine according to claim 2, **characterised in that** a guide (15) coated with a non-stick coating for the material freed from the protective film is arranged downstream of the peeling device (12, 13).

4. The interchangeable magazine according to any one claims 1 to 3, **characterised in that** at least one deflection roller (14) for guiding and deflecting the material still provided with the protective film in a vertical direction is provided between the storage roller (9) and the at least one peeling device (12, 13) of the at least one protective film take-up roller (10, 11).

5. The interchangeable magazine according to claim 4, **characterised in that** a rotary decoder is arranged on the at least one deflection roller (14).

6. The interchangeable magazine according to claim 5, **characterised in that** it comprises at least one brake (16) for retarding the storage roller (9).

7. A device (2) for laying film-like material in a shape (3, 4), **characterised in that** it comprises an interchangeable magazine (8) according to any one of claims 1 to 6.

8. The device according to claim 7, **characterised in that** it comprises at least one flexible press-on device (18), in order to press the material freed from the protective film into a predetermined shape (3, 4).

9. The device according to claim 8, **characterised in that** at least one deflection device (19) is provided between the interchangeable magazine (8) and the at least one flexible press-on device (18), in order to guide the material exiting from the interchangeable magazine (8) in the direction of the press-on device (18).

10. The device according to claim 8 or 9, **characterised in that** the press-on device comprises at least three rollers (22, 23), wherein at least two rollers (22, 23) are arranged beside one another as viewed in the laying direction of the film-like material.

11. The device according to any one of claims 8 to 10, **characterised in that** at least two rows of rollers (22, 23) are arranged behind one another as viewed in the laying direction of the film-like material, wherein each row comprises a plurality of rollers (22, 23) arranged beside one another normal to the laying direction, wherein the rollers (22) of one row with respect to the rollers (23) another row are arranged offset normal to the laying direction.

12. The device according to claim 10 or 11, **characterised in that** each roller (22, 23) is mounted rotatably in a rocker (24), wherein the rocker (24) is mounted rotatably about an axis (25) running parallel to the laying direction of the film.

13. The device according to claim 12, **characterised in that** the rocker (24) is connected to an actuator (26).

14. The device according to any one of claims 7 to 13, **characterised in that** it comprises a cutting device (20) for severing the material.

15. The device according to any one of claims 8 to 14, **characterised in that** a support (21) is provided, said support being arranged in the conveying direction of the material before the press-on device (18) and supporting a front portion of the material deflected by the deflection device (19) in the direction of the press-on device (18).

16. The device according to claim 15, **characterised in that** the support (21) is displaceable in the direction of the press-on device (18) and vice versa.

17. The device according to claim 14 or 15, **characterised in that** the support (21) comprises a plurality of rods arranged in parallel with one another, which are mounted individually pivotable about at least one horizontally running axis and are provided as a support surface for the front portion of the material conveyed in the direction of the press-on device (18).

18. The device according to claim 17, **characterised in that** the rods are constituted as hollow rods and comprises suction openings for sucking the material.

19. The device according to any one of claim 17 or 18, **characterised in that** the end regions of the rods facing towards the press-on device (18) are constituted conical and comprise rounded-off tips.

20. The device according to claim 15 or 16, **characterised in that** the support (21) is formed by endless belts (31), which are arranged beside one another and which are each mounted individually pivotable on a common, driven shaft (28) at one of their ends and are each guided in a deflection element (29), in particular a deflection roller, at the other of their ends.

21. The device according to claim 20, **characterised in that** each endless belt (31) is guided in a frame (32), wherein the deflection element (29) is arranged at a region facing the film-like material.

22. The device according to any one of claims 15 to 21, **characterised in that** end regions of the support (21) facing the film-like material are each covered by a cover (27), in particular a Teflon cap.

## Revendications

1. Rack changeur (8) qui peut être changé dans son ensemble et qui fait partie d'un dispositif (2) pour la pose d'un matériau sous forme d'un film, qui est muni d'un film protecteur, qui recouvre une surface du matériau, le rack changeur (8) comprenant un rouleau de stockage (9) sur lequel le matériau sous forme de film est enroulé en même temps que le film protecteur, le rack changeur (8) comprenant au moins un rouleau d'enroulement de film protecteur (10, 11) pour l'enroulement de portions du film protecteur avec son détachement du matériau, le rouleau de stockage (9) étant entraîné par un mouvement d'enroulement de l'au moins un rouleau d'enroulement de film protecteur (10, 11).

2. Rack changeur selon la revendication 1, **caractérisé en ce que**, entre le rouleau de stockage (9) et le rouleau d'enroulement de film protecteur (10, 11), est prévu au moins un dispositif de pelage (12, 13) pour le détachement du film protecteur du matériau.

3. Rack changeur selon la revendication 2, **caractérisé en ce qu'**en aval du dispositif de pelage (12, 13) est disposé un guidage (15) revêtu d'un revêtement anti-adhésif pour le matériau libéré du film protecteur.

4. Rack changeur selon l'une des revendications 1 à 3, **caractérisé en ce que**, entre le rouleau de stockage (9) et l'au moins un dispositif de pelage (12, 13) de l'au moins un rouleau d'enroulement de film protecteur (10, 11), est prévu au moins un rouleau de renvoi (14) pour le guidage et le renvoi du matériau encore muni du film protecteur dans une direction verticale.

5. Rack changeur selon la revendication 4, **caractérisé en ce que**, sur l'au moins un rouleau de renvoi (14), se trouve un capteur de rotation.

6. Rack changeur selon la revendication 5, **caractérisé en ce qu'**il comprend au moins un frein (16) pour le freinage du rouleau de stockage (9).

7. Dispositif (2) pour la pose d'un matériau sous forme d'un film dans une forme (3, 4), **caractérisé en ce qu'**il comprend un rack changeur (8) selon l'une des revendications 1 à 6.

8. Dispositif selon la revendication 7, **caractérisé en ce qu'**il comprend au moins un dispositif de compression flexible (18) afin de comprimer le matériau libéré du film protecteur dans une forme (3, 4) prédéterminée.

9. Dispositif selon la revendication 8, **caractérisé en ce que**, entre le rack changeur (8) et l'au moins un dispositif de compression flexible (18), est prévu au moins un dispositif de renvoi (19), afin de guider le matériau sortant du rack changeur (8) en direction du dispositif de compression (18).

10. Dispositif selon la revendication 8 ou 9, **caractérisé en ce que** le dispositif de compression comprend au moins trois rouleaux (22, 23), au moins deux rouleaux (22, 23) étant disposés les uns à côté des autres vus dans la direction de pose du matériau sous forme de film.

11. Dispositif selon l'une des revendications 8 à 10, **caractérisé en ce que**, vu dans la direction de pose du matériau sous forme de film, sont disposées au moins deux séries de rouleaux (22, 23) disposées l'une derrière l'autre, chaque série comprenant plusieurs rouleaux (22, 23) disposés transversalement par rapport à la direction de pose, les rouleaux (22) d'une série étant disposés de manière décalée transversalement par rapport à la direction de pose par rapport aux rouleaux (23) d'une autre série.

12. Dispositif selon la revendication 10 ou 11, **caractérisé en ce que** chaque rouleau (22, 23) est logé de manière rotative dans une bascule (24), la bascule (24) étant logée de manière rotative autour d'un axe (25) parallèle à la direction de pose du film.

13. Dispositif selon la revendication 12, **caractérisé en ce que** chaque bascule (24) est reliée avec un actionneur (26).

14. Dispositif selon l'une des revendications 7 à 13, **caractérisé en ce qu'**il comprend un dispositif de coupe (20) pour la séparation du matériau.

15. Dispositif selon l'une des revendications 8 à 14, **caractérisé en ce qu'**un dispositif d'appui (21), disposé, dans la direction d'avance du matériau, avant le dispositif de compression (18) et soutenant une portion frontale du matériau, renvoyée par le dispositif de renvoi (19) en direction du dispositif de compression (18).

16. Dispositif selon la revendication 15, **caractérisé en ce que** le dispositif d'appui (21) peut être déplacé en direction du dispositif de compression (18) et inversement.

17. Dispositif selon la revendication 14 ou 15, **caractérisé en ce que** le dispositif d'appui (21) comprend plusieurs tiges disposées parallèlement entre elles, qui sont logées de manière pivotante individuellement autour d'au moins un axe horizontal et qui servent de surfaces d'appuis pour la portion frontale du matériau convoyée en direction du dispositif de compression (18).

18. Dispositif selon la revendication 17, **caractérisé en ce que** les tiges sont conçues comme des tiges creuses et comprennent des ouvertures d'aspiration pour l'aspiration du matériau.

19. Dispositif selon l'une des revendications 17 ou 18, **caractérisé en ce que** les parties d'extrémité des tiges orientées vers le dispositif de compression (18) sont conçues de manière conique et présentent des pointes arrondies.

20. Dispositif selon la revendication 15 ou 16, **caractérisé en ce que** le dispositif d'appui (21) est constitué de bandes sans fin (31) disposées les unes à côté des autres, qui sont logées de manière pivotante individuellement, au niveau d'une de leurs extrémités, sur un arbre entraîné (28) commun et sont guidées, au niveau de leur autre extrémité, dans un dispositif de renvoi (29), plus particulièrement un rouleau de renvoi.

21. Dispositif selon al revendication 20, **caractérisé en ce que** chaque bande sans fin (31) est guidée dans un cadre (32), le dispositif de renvoi (29) étant disposé sur une partie orientée vers le matériau sous forme de film.

22. Dispositif selon l'une des revendications 15 à 21, **caractérisé en ce que** les parties d'extrémité du dispositif d'appui (21) orientées vers le matériau sous forme de film sont recouvertes chacune d'une protection (27), plus particulièrement d'un capuchon en téflon.
